# EUROPEAN PATENT SPECIFICATION

(11) **EP 1 154 852 B1**
(45) Date of publication and mention of the grant of the patent: **03.01.2007**
(21) Application number: 00903882.9
(22) Date of filing: 17.02.2000
(51) Int. Cl.: B01J 23/02, B01J 23/58, B01J 37/02, B01D 53/94

(54) **STABILIZATION OF TRANSITION ALUMINA**
STABILISIERUNG VON ÜBERGANGS-ALUMINIUMOXYD
STABILISATION D'UNE ALUMINE DE TRANSITION

(30) Priority: 24.02.1999 GB 9904269
(43) Date of publication of application: 21.11.2001
(73) Proprietor: EUROPEAN COMMUNITY, 1049 Brussels (BE)
(72) Inventor: PICKERING, Stephen, B-1310 La Hulpe (BE); DJURICIC, Boro, A-2340 Moedling (AT); MAGNE, Jean-François, F-16730 Linars (FR)
(74) Representative: Freylinger, Ernest T.
(86) International application number: PCT/GB2000/000571
(87) International publication number: WO 2000/050168

(56) References cited:
- US-A- 5 116 800
- US-A- 5 212 130
- DATABASE WPI Section Ch, Week 199040 Derwent Publications Ltd., London, GB; Class H06, AN 1990-302272 XP002140068 & JP 02 214541 A (TOYO KOGYO CO), 27 August 1990 (1990-08-27)

## Description

The present invention relates to the general field of catalysts, such as automobile exhaust catalysts, and, in particular, to a stabilized transition alumina catalyst support material.

Rapid developments in combustion technology coupled with the increasing demands for reduced levels of pollutants emitted by combustion processes has created a demand for new catalyst materials. In particular, new catalysts are needed for temperatures above 1000°C, not only for the removal of pollutants, for example to clean up automobile exhausts, but also for catalytic combustion, for example in heaters, boilers, and gas turbines. The catalytic combustion of fuels offers the advantages of a more uniform combustion temperature and a more complete combustion of the fuel. The result is a higher thermal efficiency, together with less nitrogen oxide formation through the prevention of localised high temperature areas.

Automobile exhaust catalysts are used to reduce automobile exhaust emissions by converting CO, unburned hydrocarbons and NOₓ in the exhaust gas to an environmentally less harmful mixture comprising CO₂, H₂O and N₂. The catalysts typically comprise a metal or ceramic monolithic carrier, such as Cordierite (2MgO.2Al₂O₃.5SiO₂), coated with a high surface area catalyst support material. Catalytically active noble metal particles such as, for example, Pt, Pd and/or Rh, and other additives, are dispersed on and within the support material.

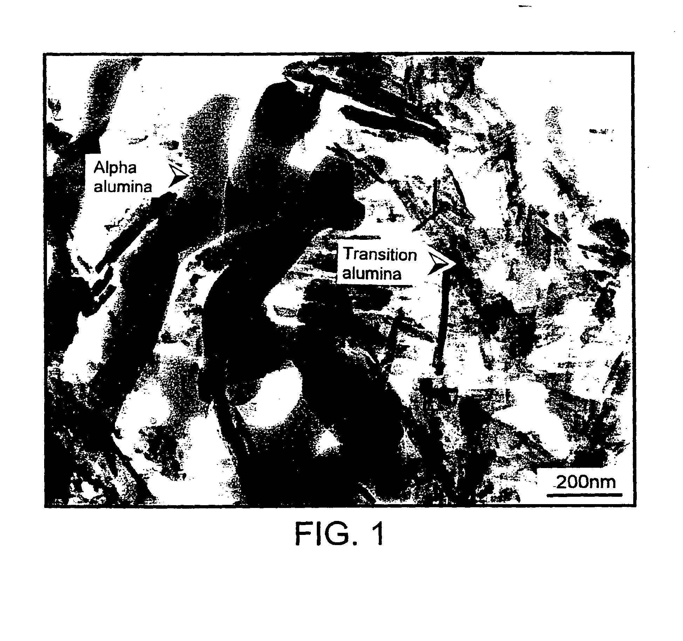

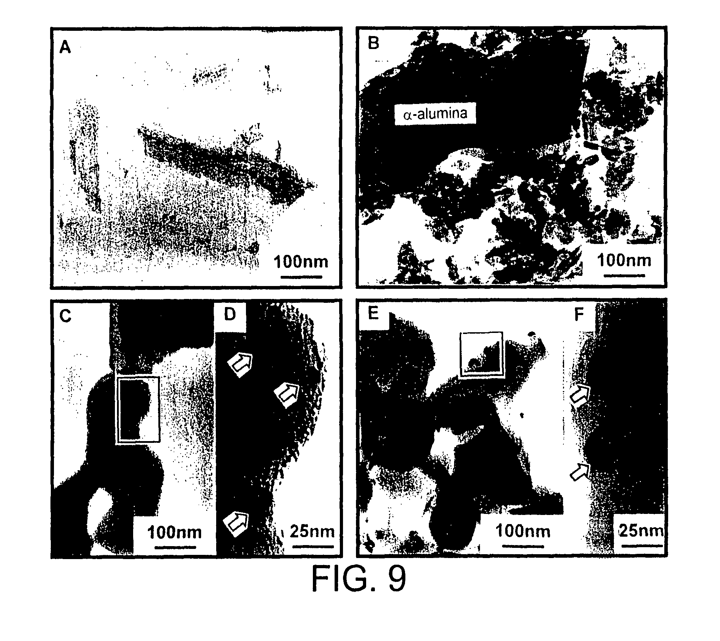

The catalytically active particles need to be held in the exhaust gas stream on a support material which has a high specific surface area to maximize their exposure to the gas stream and thereby maximize the catalytic efficiency. Gamma-alumina and the closely related transition aluminas theta and delta are commonly used as support materials because of their high specific surface areas. In particular, gamma-alumina is unusual among ceramic materials in that it has a very high specific surface area, for example exceeding 100 m²/g, compared with the more typical values of from about 1 to 5 m²/g for other ceramic materials. However, gamma and the other transition aluminas are metastable phases, which are subject to thermal degradation and undergo a phase transition at temperatures exceeding about 1000°C to the thermodynamically more stable alpha-alumina (see Figures 1 and 9B) with the corollary of a significant reduction in the specific surface area; typically from about 100 m²/g to about 1 to 2 m²/g. This results in a corresponding reduction in catalytic activity. The transformation sequence for boehmite is gamma → delta → theta → alpha. Gamma, delta and theta alumina all have a cubic oxygen sub-lattice and the only difference between them is in the progressive increase in ordering of aluminium atoms on the cation deficient aluminium sub-lattice. In contrast, alpha-alumina has a hexagonal oxygen sub-lattice and its formation involves a total restructuring of the lattice.

Thermal degradation of transition alumina is a kinetic effect which accelerates rapidly with increasing temperature. Whereas at 600°C it is too slow to be significant within the lifetime of a catalytic converter, at 1100°C it may be complete within 1 hour. Catalytic converters are operated at the upper limit of their stability and catalyst support materials with improved resistance to thermal degradation would allow higher operating temperatures and a longer service life.

Automotive exhaust gases from petrol engines may contain up to 3% CO and 100 ppm unburned hydrocarbons which react exothermically in the catalytic converter with NOₓ to yield an environmentally less harmful mixture of gases, namely CO₂, H₂O and N₂. Peak operation temperatures of from about 700°C to about 800°C are frequently achieved. The current trend to reduce CO₂ emissions has resulted in increased use of diesel engines with lower fuel consumption and hence lower CO₂ emissions. However, diesel engines operate at higher exhaust temperatures; approximately 800°C is normal with peak temperatures of up to about 1300°C.

The conventional solution to the thermal degradation of gamma and the other transition aluminas is the use additives, such as, for example, Zr, Ba, Ce, La, Si, either singly or in combination. US-4,624,940 relates to a catalyst for the oxidation of carbon monoxide and unburned hydrocarbons in an exhaust stream. The catalyst comprises support particles of stabilized gamma-alumina having palladium dispersed thereon and can remain effective after exposure to temperatures greater than 1000°C. The gamma-alumina is stabilized by either (i) incorporation of a combination of lanthana and baria into the alumina particles, or (ii) impregnation of the alumina particles with an aqueous dispersion of a high molecular weight polyorganosiloxane followed by heating to a temperature which is effective to decompose the polyorganosiloxane. The additives are introduced by soaking an alumina powder or a solid alumina precursor in a solution containing the additive followed by drying and calcining at a temperature sufficient to effect stabilization. An alternative but less widely used method of introducing additives is by a coprecipitation process as described in US-4,056,489. In this manner an intimate admixture of alumina and the stabilizing additives is formed, which is then calcined.

US 5,212,130 gives a general teaching to produce a high surface area washcoat for use as a support for catalysts. The waistcoats are made essentially of of AO-Al₂O₃, wherein A is Ba and/or Sr. The high surface is achieved by a method which involves forming the AO-Al₂O₃ by contacting element A in the ionic form with an aluminium oxide yielding species followed by firing to result in the A (Ba or Sr) being homogenously distributed through the Al₂O₃.

The present inventors have now devised a process whereby transition alumina can be further stabilized against thermal degradation to alpha-alumina. This results in a catalyst which is effective at higher operating temperatures and for longer times compared with the prior art catalysts.

Accordingly, in a first aspect the present invention provides a process for the production of a precursor material for use in the preparation of a stabilized alumina catalyst support material, which process comprises the steps of:
(a) providing a substantially homogenous mixture comprising aluminium and barium containing compounds, wherein said mixture is in the form of a substantially homogenous precipitate; and (
(b) heating the mixture under conditions to form particles of boehmite at least partially coated with a layer comprising a compound of barium.

Boehmite is a mineral form of aluminium monohydroxide (AlO.OH).
The additive is preferably a barium containing compound. The layer formed on the particles of boehmite preferably comprises barium carbonate.
An important advantage of the process according to the present invention is that the particles of boehmite can be substantially coated completely with the said layer.
The mixture in step (a) is preferably a substantially homogenous mixture. The substantially homogenous mixture may be formed by any process which results in an intimate admixture. For example, by forming a slurry of boehmite and/or gamma alumina with a water-soluble compound of barium, such as barium nitrate, or, alternatively, by adding a barium containing solution to a gel comprising an aluminium containing compound.

A particularly preferred process for forming the substantially homogenous mixture is by homogeneous precipitation, ideally homogeneous precipitation of water-soluble aluminium and barium containing compounds, for example salts thereof. Suitable aluminum compounds include aluminium nitrate, aluminium sulphate and/or aluminium chloride, preferably aluminium chloride hexahydrate (AlCl₃·6H₂O). Suitable barium compounds include barium nitrate, barium sulphate and/or barium chloride, preferably barium chloride dihydrate (BaCl₂·2H₂O).

Precipitation from aqueous solution is widely used for producing ceramic oxide powders. Precipitation occurs by adding a precipitating ligand (anion) to a solution containing cations of the appropriate metal. If the precipitating ligand is added directly by simply pouring one solution into another then there is little control of the chemistry during precipitation because of the large and inhomogeneous gradients in solution concentration. Better control of chemical and morphological characteristics can be achieved if the precipitating ligands are generated "in situ", simultaneously and uniformly throughout the solution. This is know as a "homogeneous" precipitation process. In a preferred aspect of the present invention the mixture in step (a) is formed by homogeneous precipitation in which a base is generated within a metal salt solution through thermal decomposition of a suitable water-soluble reagent. Suitable water-soluble reagents include any compound that decomposes on heating in aqueous solution to release NH₃ groups, thereby forming ammonium hydroxide which increases the pH of the solution. Examples include urea and amines, such as hexamethylene tetramine. Suitable compounds of aluminium include aluminium nitrate, aluminium sulphate and/or aluminium chloride, preferably aluminium chloride hexahydrate (AlCl₃·6H₂O). Suitable compounds of barium include barium nitrate, barium sulphate and/or barium chloride, preferably barium chloride dihydrate (BaCl₂·2H₂O). A small amount of a dispersant, for example polyvinylpyrrolidone, may also be added to the metal salt solution. The dispersant improves the uniformity of the precipitation product by reducing the tendency of the precipitate particles to stick together. Additionally, diffusion of ionic species through an adsorbed dispersant layer may be the rate limiting step to further particle growth.

The mixture comprising aluminium and barium containing compounds will generally be in the form of a gel when produced by the homogeneous precipitation process described above, although the mixture can take other forms including, for example, hydroxides, molecular and ionic complex species or compounds. The gel is a three-dimensional network of colloidal particles of mainly amorphous aluminium hydroxide containing a large amount of water (for example approximately 170 g of wet gel yields approximately 7 g of dried powder) and in which the barium additive is trapped. The consistency of the gel is generally between that of a thick paste and a jelly, and it easily breaks up when stirred in an excess of water and slowly settles to the bottom again.

The mixture comprising aluminum and barium containing compounds may also be formed by adding a water-soluble barium compound, for example barium nitrate, barium sulphate and/or barium chloride, to a slurry of, for example, boehmite in water. Advantageously, an organic acid, such as a carboxylic acid is added to the mixture. A preferred carboxylic acid is oxalic acid. In a particularly preferred aspect, a solution comprising barium nitrate and oxalic acid is added to the slurry of boehmite in water and the mixture is then heated under conditions to produce particles of boehmite at least partially coated with a layer comprising barium and/or a barium compound.

The heating in step (b) is preferably achieved by a hydrothermal treatment, which is typically carried out on an aqueous solution of the mixture of aluminium and barium containing compounds in a pressure vessel, such as an autoclave, at a temperature above the normal boiling point and under applied or autogenous pressure to substantially prevent boiling. The hydrothermal treatment will generally be performed at a temperature typically in the range of from 90 to 300°C, more typically from 100 to 220°C. It will be appreciated that the pressure required to substantially prevent boiling will depend on the applied temperature. Typically, the hydrothermal treatment is performed at a pressure in the range of from 1 to 150 bar, more typically from 5 to 50 bar, still more typically from 10 to 40 bar. The hydrothermal treatment is typically carried out for a time in the range of from 30 minutes to 25 hours, more typically from 1 to 10 hours.

The heating in step (b) may also be achieved by heating at a temperature in the range of from ambient temperature to boiling temperature. This may readily be achieved by a reflux operation, which may be carried out, for example, at atmospheric pressure and a temperature in the range of from 80 to 120°C, preferably approximately 100°C.

In one aspect of the present invention, the process of forming coated boehmite particles from a solution comprising aluminium and barium containing compounds can be seen to involve sequential precipitation: first, the formation of an aluminium hydroxide gel; second the precipitation of barium and/or a barium compound (probably as a carbonate) within the gel at a higher pH to give a uniform mixture; third crystallization of boehmite particles; and fourth precipitation or re-precipitation of barium and/or a barium compound (probably as a carbonate) on the surface of the boehmite particles.

The product of the process according to the first aspect of the present invention may subsequently be dried and then calcined. Drying and calcination will generally be carried out in air or other oxidizing atmosphere.

In a second aspect, the present invention provides a process for the preparation of a stabilized alumina catalyst support material, which process comprises the steps of:
(i) providing a precursor material comprising particles of boehmite at least partially coated with a layer comprising barium and/or a compound of barium; and
(ii) heating the coated particles of boehmite to a temperature at which at least some of the boehmite transforms to gamma-alumina.

In the second aspect, heating is typically carried out at a temperature in the range of from 500 to 1000°C. The process may also include an additional step of further heating whereby at least some of the gamma-alumina transforms to theta and/or delta-alumina. The further heating is typically carried out at a temperature in the range of from 1000 to 1400°C. Heating will generally be carried out in air or other oxidizing atmosphere.

The precursor material comprising particles of boehmite may be unsupported or may be provided in the form of a washcoat on a catalyst carrier substrate, such as a ceramic honeycomb.

The gamma-alumina particles produced according to the second aspect of the present invention may be provided in the form of a dry powder which can be redispersed in an appropriate liquid, such as water, to form a slurry or washcoat.

The precursor material may be produced according to a process as herein described with reference to the first aspect of the invention.

In a third aspect, the present invention provides a process for the preparation of a catalyst, such as an automotive catalytic converter, which process comprises the steps of dispersing a precursor mixture comprising particles of boehmite at least partially coated with a layer comprising barium and/or a compound of barium on a metal or ceramic monolithic substrate, followed by heating the precursor mixture to a temperature at which at least some of the boehmite transforms to gamma-alumina.

In the third aspect, heating is typically carried out at a temperature in the range of from 500 to 1000°C. The process may also include an additional step of further heating whereby at least some of the gamma-alumina transforms to delta and/or theta-alumina. The further heating is typically carried out at a temperature in the range of from 1000 to 1400°C. Again, heating will generally be carried out in air or other oxidizing atmosphere.

The mixture can be dispersed on to metal or ceramic monolithic substrate in a conventional manner, for example by dipping the substrate one or more times into an aqueous slurry (washcoat) of the coated boehmite powder, followed by drying.

In the second and third aspects of the present invention, the particles of gamma-alumina, theta, delta-alumina and/or boehmite will typically be at least partially coated with a layer comprising barium and/or a compound of barium. The layer will typically comprise one or more of barium carbonate, barium oxide and/or barium aluminate depending on the heat-treatment. For gamma-alumina particles, the layer will generally comprise barium oxide as the major constituent, whilst for theta and delta-alumina particles, the layer will generally comprise one or more barium aluminates as the major constituent(s).

In a fourth aspect, the present invention provides a process for the preparation of a catalyst, such as an automotive catalytic converter, which process comprises the step of dispersing a stabilized alumina catalyst support material as herein described on a metal or ceramic monolithic substrate.

Again, the stabilized alumina catalyst support material may be dispersed on to the metal or ceramic monolithic substrate in a conventional manner, for example by dipping the substrate one or more times into an aqueous slurry (washcoat) of stabilized alumina powder, followed by drying.

In a fifth aspect, the present invention provides a precursor material for use in the preparation of catalyst support material, which precursor material comprises particles of boehmite and/or transition alumina at least partially coated with a layer comprising barium and/or a compound of barium.

Each particle of boehmite and/or transition alumina preferably has a substantially uniform surface layer comprising barium and/or a compound of barium. The layer will typically comprise one or more of barium carbonate, barium oxide and/or barium aluminate depending on the heat-treatment used to process the particles. For boehmite, the layer will generally comprise barium carbonate as the major constituent; for gamma-alumina particles, the layer will generally comprise barium oxide as the major constituent; and for theta and delta-alumina particles, the layer will generally comprise one or more barium aluminates as the major constituent(s).

The size of the particles may range from 10 nm to 5 µm, but the particles typically have an average particle size in the range of from 100 to 500 nm. In general the particles take the form of thin prismatic crystals with an average length to width ratio typically of about 3:1. The average length to thickness ratio is typically in the range of from 10:1 to 20:1. The crystal sizes are for the longest dimension. The surface layer comprising barium and/or a compound of barium will typically be up to 5 nm in thickness, more typically up to 3 nm in thickness.

The precursor material may provided in the form of an aqueous slurry, a non-aqueous slurry or a powder.

In a sixth aspect, the present invention provides a stabilized alumina catalyst support material which comprises gamma, theta and/or delta-alumina, and which withstands substantial degradation to alpha-alumina after exposure to a temperature of approximately 1400°C for 1 hour when heated in, for example, air or other oxidizing atmosphere.

In this aspect, the stabilized alumina catalyst support material preferably has a specific surface area of at least 20 m²/g, more preferably at least 25 m²/g, still more preferably at least 31 m²/g, after exposure to a temperature of 1400°C for 1 hour. The specific surface area is measured using the standard BET method.

In a seventh aspect, the present invention provides a catalyst, such as an automotive catalytic converter, which comprises a metal or ceramic monolithic substrate having dispersed thereon a stabilized alumina catalyst support material as herein described.

It will be appreciated that one or more catalytically active noble metal particles, for example Pt, Pd and/or Rh, optionally together with other additives, will typically be dispersed on the support material.

In the third, fourth and seventh aspects the catalyst may be a 3-way automotive catalytic converter.

The monolithic substrate can be formed from any of the conventional ceramic materials in the art including, for example, one or more of cordierite, cordierite-alpha alumina, silicon nitride, silicon carbide, mullite, zirconia-mullite, spodumene, alumina-silica-magnesia and/or zirconium silicate. Examples of suitable metal substrates include austenitic stainless steel and high aluminium ferritic stainless steel.

It will be appreciated that the stabilized alumina according to the present invention may be used in conjunction with other components conventionally used in the field of catalysis, such as, for example: catalytic promoters, including Ni, Co, Mn, Cr₂O₃, TiO₂, ZrO₂ and/or CeO₂; washcoat stabilization oxides, including cordierite, mullite and/or magnesium aluminium titanate; additional stabilization additives, including Zr, Ce, La, Ca, Cu, Th and/or Si.

The present invention will now be described further, by way of example, with reference to the following drawings, in which:
Figure 1 is a TEM micrograph of alumina without additive showing the transformation of transition-alumina to alpha-alumina with a reduction in specific surface area;
Figure 2 is a TEM micrograph of a hydrothermally treated material showing large alpha-alumina crystals and nanoparticles of barium aluminate.
   The material was formed by heating a hydrothermally treated alumina-baria precursor to 1400°C for 1 hour in argon;
Figure 3 is a TEM micrograph showing a porous boehmite crystal pseudomorph consisting of gamma-alumina coated with a barium oxide layer. The material was formed by heating a hydrothermally-treated precipitate of an alumina-baria precursor to 1000°C for 1 hour;
Figures 4 shows TEM micrographs of boehmite pseudomorphs consisting of theta-alumina particles exhibiting a twinned structure and some residual porosity. The material was formed by heating a hydrothermally-treated precipitate of alumina-baria precursor to 1400°C for 1 hour;
Figure 5 A and B are TEM micrographs showing a comparison between boehmite produced by a hydrothermal treatment of a precipitate of an alumina-baria precursor and theta-alumina formed by heating the same boehmite: (A) boehmite produced by a hydrothermal treatment of a precipitate of an alumina-baria precursor, and (B) theta-alumina formed by heating the boehmite to 1400°C for 1 hour;
Figure 6 is a flow chart showing a synthesis procedure for making alumina-baria precursor gels;
Figure 7 is a DTA analysis of an autoclave treated alumina-baria precursor gel for various heating rates.
Figures 8 A-D are TEM micrographs of an oven-dried alumina-baria precursor gel: (A) and (B) microcrystalline bayerite before calcination, bright and dark filed respectively, (C) and (D) gamma-alumina with crystals of β₁₁ after 1 hour at 1000°C, bright and dark field respectively;
Figures 9 A-F are TEM micrographs of a microwave treated alumina-baria precursor gel: (A) morphology after microwave drying, (B) large alpha-alumina crystal growing in matrix of theta-alumina after 1 hour at 1200°C in air, (C) and (D) nano-particles of β_{I} inside alpha-alumina crystals after 1 hour at 1400°C in air, (E) and (F) nano-particles of β_{I} inside and on the surface of alpha-alumina crystals after 1 hour at 1400°C in argon;
Figure 10 A-C are TEM micrographs of an autoclave treated alumina-baria precursor gel: (A) well-developed boehmite crystals after hydrothermal treatment of 4 hours at 210°C, (B) porous boehmite pseudomorphs after 1 hour at 1000°C, and (C) detail showing size, shape and orientation of pores;
Figures 11 A-D are TEM micrographs of an autoclave treated alumina-baria precursor gel after calcination for 1 hour at 1400°C in air: (A) boehmite pseudomorphs comprising theta-alumina, (B) finely twinned theta-alumina with equiaxed pores, (C) and (D) details of twinned theta-alumina structure showing twin lamella as narrow as 5 nm; and
Figures 12 A and B are TEM micrographs of an autoclave treated alumina-baria precursor gel after calcination for 1 hour at 1400°C in argon: (A) nano-particles of BaAl₁₂O₁₉ in a matrix of theta-alumina transformed extensively to alpha-alumina, (B) detail showing BaAl₁₂O₁₉ particles predominantly on the surface of the alpha-alumina.

The present inventors have investigated a number of ways of introducing barium additives to gamma-alumina and have found that they all yield similar results to those already known except for two methods which yielded a product with a markedly superior resistance to thermal degradation. The process according to the present invention relies on a hydrothermal or refluxing treatment of a substantially homogeneous mixture of aluminium and barium containing compounds.

The hydrothermal or refluxing treatment results in crystals of boehmite which appear to be coated with a layer of barium or a barium compound some nanometres thick. The layer is thought to be barium carbonate. Boehmite (AlO.OH) is an aluminium monohydroxide which is a gamma-alumina precursor. On heating to about 500°C, boehmite transforms to gamma-alumina without a substantial change in external crystal shape, but with the development of internal porosity, which is thought to be responsible for the unusually high specific surface area of gamma-alumina. It seems that by depositing the barium as a substantially uniform surface coating, the effectiveness of the barium as a stabilizer for gamma-alumina is maximized and that the hydrothermal or refluxing method is therefore markedly superior to other methods such as calcining that yield a more or less homogeneous mixture of phases.

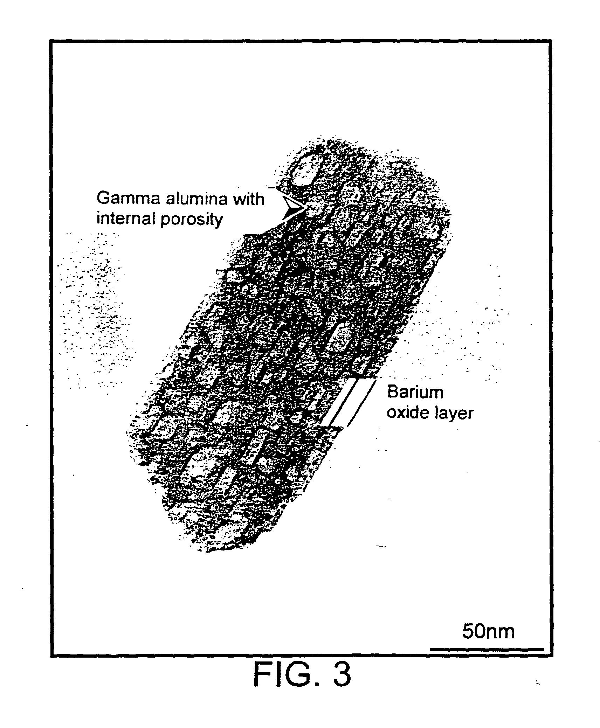

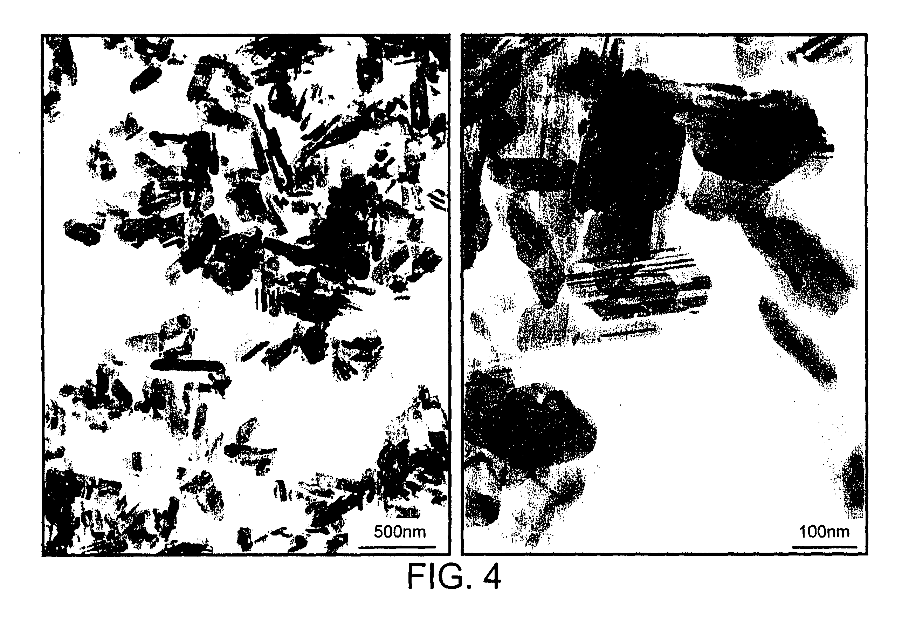

On heating, the hydrothermally treated material transforms to gamma-alumina at temperatures up to about 1000°C (see Figure 3) and transition alumina (theta and delta phases) at temperatures up to about 1400°C for about 1 hour (see Figure 4). The layer comprising the barium-containing compound, possibly barium carbonate, transforms first to barium oxide on heating to about 830°C in the pure state and then subsequently to barium aluminate.

After heating to a higher temperature, X-ray diffraction showed that the barium formed barium oxide at temperatures up to about 1000°C and various barium aluminates (for example BaAl₂O₄, BaAl_{13.2}O_{20.8} and BaAl_{9.2}O_{14.8}) at higher temperatures. These phases were present in all samples, not just in the case of the hydrothermally treated samples.

Barium aluminates are believed to be effective in preventing the nucleation of alpha-alumina if a sufficient quantity is present on the surface of gamma-alumina particles to fill surface defects which otherwise act as nucleation sites for the phase transformation to alpha-alumina.

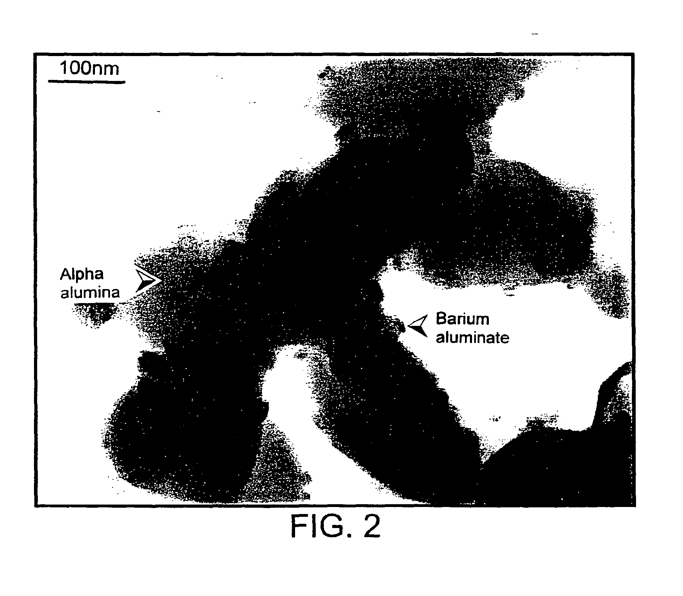

In microwave-treated materials after about 1 hour at approximately 1200°C, barium aluminate (BaAl_{13.2}O_{20.8}) was visible as nano-sized particles predominantly inside much larger alpha-alumina crystals in transmission electron micrographs and was particularly well-developed after about 1 hour at approximately 1400°C (see Figures 9C and 9D), whereas in hydrothermally-treated alumina such particles were absent after treatment at 1400°C, except when heated in argon instead of air, in which case nano-sized particles of barium aluminate (BaAl₁₂O₁₉) were visible, predominantly on the surface of the alpha-alumina crystals (see Figure 2). The conclusion is that barium aluminate was present as a thin surface layer in the hydrothermally treated material even after 1 hour at 1400°C in air, but not in a similar starting material treated by oven-drying or microwave-drying because those materials transformed or partly transformed to alpha-alumina after 1 hour at 1200°C, a temperature similar to that reported by other authors. An important step therefore seems to be the formation of a generally uniform surface layer of barium and/or a barium compound on the boehmite crystals during the hydrothermal or refluxing treatment.

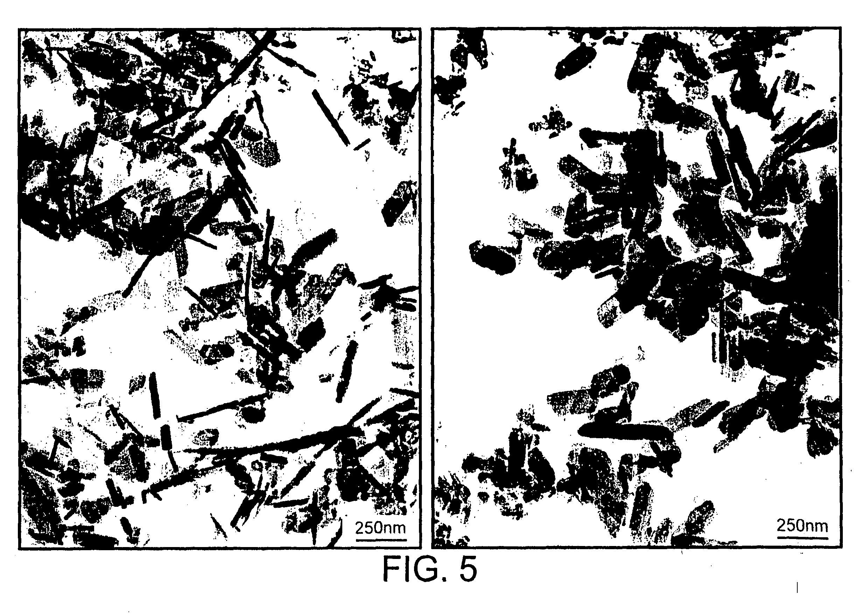

The length of hydrothermal treatment is important in determining the specific surface area of the product after the subsequent high temperature treatment. After heating for 1 hour at 1400°C, a material that was previously given a 4 hour hydrothermal treatment at approximately 210°C resulted in theta-alumina with a specific surface area of 6 m²/g. In contrast, after heating for 1 hour at 1400°C, a material that was previously given a 22 hour hydrothermal treatment at 210°C resulted in theta-alumina with a more useful specific surface area of 31 m²/g. Such a material would retain sufficient surface area to remain effective as a catalyst support material. Figures 5A and 5B shows that there is remarkably little change in general appearance of the hydrothermally treated material before (5A) and after (5B) heating for 1 hour at 1400°C which demonstrates the effectiveness of this material in resisting thermal degradation.

The present invention will now be described further with reference to the following Examples and Comparative Examples.

### Examples

Aluminium chloride hexahydrate (AlCl₃·6H₂O) (Merck, crystalline, purified), barium chloride dihydrate (BaCl₂·2H₂O) (Baker, analysed, reagent grade), urea (CON₂H₄) (Acros, p.a.) and polyvinylpyrrolidone (PVP, Aldrich, K-30, special grade) were used as received. Solutions of the above reagents were filtered before use.

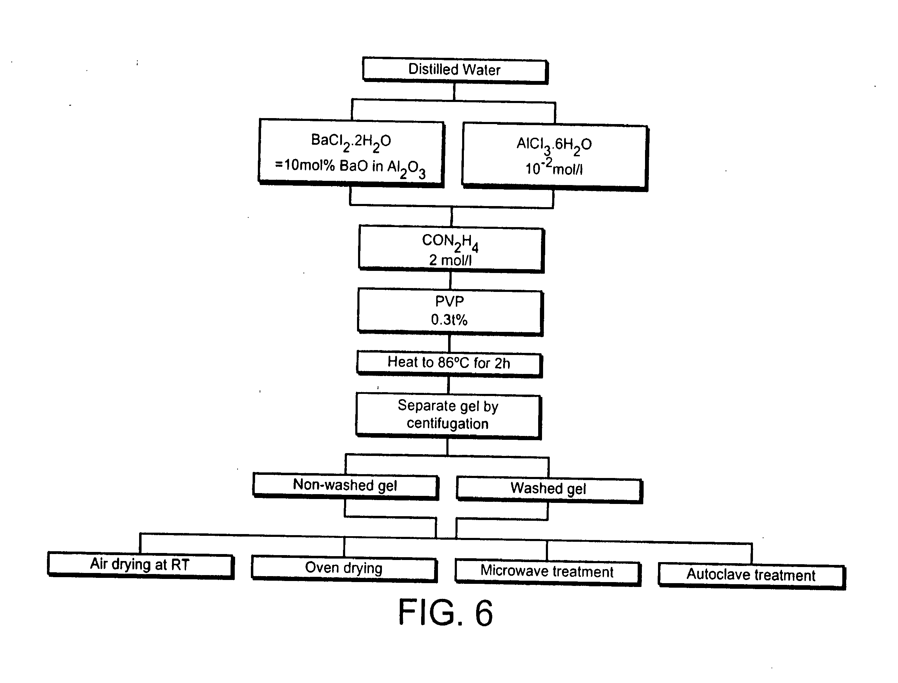

Alumina and alumina doped with approximately 10 mol% baria were synthesised by homogeneous precipitation from a metal salt solution induced by the thermal decomposition of urea as shown in the flow chart in Figure 6. On heating the solution to approximately 86°C, the urea decomposed to produce a controlled and uniform increase in pH until precipitation occurred. Very fine sol particles sedimented from the solution after standing for several hours at room temperature. The reaction product was centrifuged to separate the characteristically voluminous and transparent gel. The gel was washed twice with double its own volume of distilled water to remove most of the anion and organic impurities. About 1200 ml of the transparent gel was produced from 5 1 of solution in a typical experiment.

Some Ba²⁺ was detected qualitatively in the washing water by precipitation with SO₄²⁻. The loss of barium could be avoided by omitting the washing step, in which case the chloride anion was removed by sublimation of NH₄Cl, either during microwave drying, or during calcination in the case of the oven-dried specimens. For autoclave treated gels, washing carried out after crystallisation of boehmite and barium carbonate removed chloride ions without a loss of barium.

The alumina and alumina-baria gels were treated in a variety of different ways: air-dried at room temperature; oven-dried at a temperature in the range of from 90 to 100°C; dried in a microwave oven; and hydrothermally treated in an autoclave. The air-dried gel was prepared by leaving the gel in a glass beaker at room temperature until a solid formed which was then crushed in an agate mortar to produce a fine powder. The oven-dried gel was prepared by heating the gel in air in an oven at about 90 to 100°C for approximately 24 hours; the solid was then crushed as above to produce a fine powder. The microwave-dried samples of gel were prepared in a standard domestic microwave oven at a power setting of 500 W using cycles of 5 min power on and from 2 to 3 min power off, because of extensive foaming of the gel due to the release of gaseous products. The dried solid was crushed as above and later calcined at different temperatures. The hydrothermal treatment was conducted on 150 ml samples of centrifuged gel in 230 ml Teflon-lined pressure-tight steel containers. A heating rate of about 0.5°C/min to a temperature of 210 ± 5°C was used. The hold time at the temperature was about 4 hours. The resulting brownish liquor with a pH in the range of from 8 to 8.5 was decanted and the crystallised product was dried at a temperature from 90 to 100°C. The crystalline product was calcined in either air or argon.

The size of the colloidal particles in the alumina and alumina-baria gels was measured by Small Angle X-ray Scattering (SAXS); evaluation of the results of this technique was based on the assumption that the gel was a fractal system (see J. Teixeira, *J*. *Appl. Cryst.* 21 (1988) 781). The phase composition of the samples was determined by XRD, either in-situ during calcination (Siemens D5000), or conventionally before and after calcination at various temperatures (Philips PW173). Thermal decomposition of the gel to the calcined products on heating to 1400°C was observed by differential thermal analysis and thermogravimetry (DTA/TG, Netsch Simultaneous Analyser STA 409). Transmission electron microscopy (TEM, Philips EM 400) and High Resolution Transmission Electron Microscopy (HRTEM, JEOL 4000 EX/II with a point resolution of 0.165 nm at 400 κV) were used for analysis of the fine structure of uncalcined and calcined samples. Electron microscopy samples were prepared by dispersing the powder in ethyl alcohol, placing a drop of this suspension on a carbon-coated copper grid, and allowing the alcohol to evaporate. The specific surface area was measured by BET nitrogen adsorption (Coulter-Omnisorp 360).

The important characteristic of the homogeneous precipitation process was that it yielded a product substantially uniform both in chemical composition and particle size. The decomposition of urea on heating the solution released ammonium ions into solution in a very uniform manner resulting in a gradual and uniform increase in pH. These uniform conditions ensured that the alumina-baria composite gel which precipitated from the dissolved chloride salts was substantially chemically homogeneous on a colloidal scale. The precipitation kinetics were easily controlled through the heating rate and the ageing temperature. The flow chart in Figure 6 summarises the steps and conditions of the synthesis.

The size of the sol particles in the gel samples was calculated from SAXS measurements as shown in Table 1. The alumina and alumina-baria precursor gels both consisted of particles of about 4 nm diameter and the fractal dimension indicates that both gels were in a similar state of aggregation.

**Table 1: Properties of alumina and alumina-baria precursor gel measured by SAXS**

| | Alumina | Alumina-baria |
|---|---|---|
| Fractal dimension | 2.2 | 2.4 |
| Particle diameter (nm) | 3.7 | 4.1 |

The phase evolution during calcination was studied by X-ray diffraction "in-situ" and conventionally, i.e. on specimens measured at room temperature after calcination. The main results for the conventional measurements are summarised in Table 2 with phases listed in order of abundance. The phases in alumina-baria samples were compared with those in pure alumina samples to obtain information on the effects of each of the gel treatment techniques.

**Table 2: Phase composition of alumina-baria samples before and after calcination of dehydrated gel.**

| | | | | | |
|---|---|---|---|---|---|
| sample | Phases determined by XRD | | | | |
| | air | | | | argon |
| | uncalcined | 1000°C 1h | 1200°C 1h | 1400°C 1h | 1400°C 1h |
| oven dried 100°C 24h | amorphous bayerite urea (tr) | γ-Al₂O₃ BaO | α-Al₂O₃ BaAl₂O₄ β_{I} | α-Al₂O₃ β_{I} | nd |
| microwave dried | amorphous boehmite BaAl₁₂O₁₉ (i) | γ-Al₂O₃ β_{II} (tr) | α-Al₂O₃ θ-Al₂O₃ β_{I} | α-Al₂O₃ β_{I} | α-Al₂O₃ β_{I} |
| autoclaved 4h | boehmite BaCO₃(i) | γ-Al₂O₃ δ-Al₂O₃ BaO(i) | θ-Al₂O₃ δ-Al₂O₃ BaAl₂O₄ | θ-Al₂O₃ δ-Al₂O₃ BaAl₂O₄ β_{II} | α-Al₂O₃ θ-Al₂O₃ BaAl₁₂O₁₉ |
| autoclaved 22h | nd | nd | nd | θ-Al₂O₃ BaAl₂O₄ β_{II} | nd |

| | | | | | |
|---|---|---|---|---|---|
| β₁ = BaAl_{13.2}O_{20.8}, (Bao·6.6Al₂O₃), β₁₁ = BaAl_{9.2}O_{14.8}, (BaO·4.6Al₂O₃), tr = traces, (i) only most intense peaks visible, nd = not determined | | | | | |

The alumina-baria gel dried at room temperature appeared to be amorphous from the XRD spectra. The only indication of the presence of a crystalline phase was a small amount of retained urea. The XRD spectrum for the oven-dried sample (100°C) also indicated predominantly amorphous material and the presence of very poorly crystallized bayerite Al(OH)₃, besides traces of crystalline urea. There was no indication of the presence of any crystalline barium containing phase.

In the microwave-treated alumina sample, "in situ" XRD indicated the presence of microcrystalline boehmite to approximately 400°C at which temperature the sample became amorphous and remained amorphous to about 800-850°C when transition alumina (γ-Al₂O₃) appeared. At about 950-1000°C transformation of γ-Al₂O₃ to α-Al₂O₃ began and was almost complete at 1200°C. In the microwave-treated alumina-baria sample, the phase initially present was also microcrystalline boehmite (or pseudo boehmite) which became amorphous at about 400°C. The transition aluminas that formed were γ-Al₂O₃ and θ-Al₂O₃ instead of just γ-Al₂O₃ as in the pure alumina sample. The transformation from θ-Al₂O₃ to α-Al₂O₃ began at about 1050-1100°C. After calcination at 1000°C for 1 hour traces of the BaAl_{9.2}O_{14.8} (β_{II}) phase were present. After calcination for 1 hour at 1200°C or 1400°C, BaAl_{13.2}O_{20.8} (β_{I}) was present instead of β_{II}. Calcination in argon or argon and air for 1 hour at 1400°C gave the same result.

In the autoclave treated alumina and alumina - baria precursor gels XRD showed that the samples initially consisted of well-crystallised boehmite which decomposed at 450-500°C to an amorphous phase. Two rather weak peaks corresponding to the main peaks in the spectrum for γ-barium carbonate were also detected. In-situ XRD showed that the two BaCO₃ peaks persisted to 700°C at which temperature a peak corresponding to the main BaO peak appeared and transition alumina formed. After 1 hour at 1000°C, γ-Al₂O₃, δ-Al₂O₃ and BaO were the phases present. After 1 hour at 1200°C γ-Al₂O₃, δ-Al₂O₃ and BaAl₂O₄ were present. After 1 hour at 1400°C, θ-Al₂O₃ and δ-Al₂O₃ were present with BaAl₂O₄ and BaAl_{9.2}O_{14.8} (β_{II}). A trace amount of α-Al₂O₃ was found in this sample calcined in air for 1 hour and, after 10 hours at 1400°C, θ-Al₂O₃ was still the predominant phase. However, in samples calcined in argon for 1 hour at 1400°C the principle phase was α-Al₂O₃.

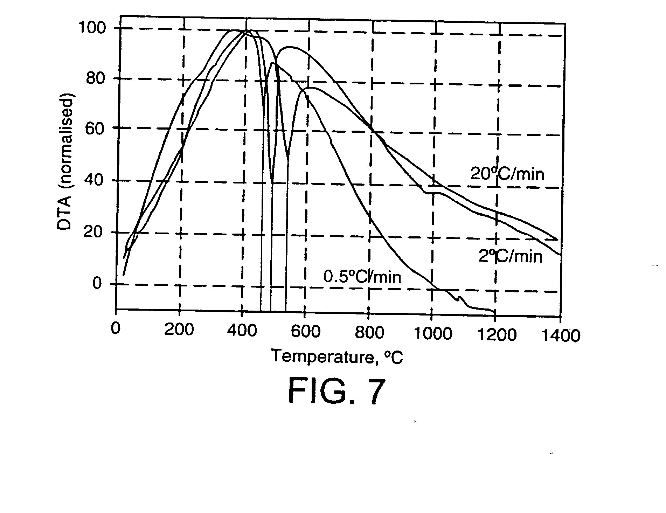

The DTA/TG curves in Figure 7 for the hydrothermally treated baria-doped samples show well-defined exothermic peaks corresponding to the decomposition of boehmite by dehydroxylation. A displacement of the dehydroxylation peaks to higher temperatures with increased heating rate indicates the slow kinetics of dehydration. The theoretical weight loss for the dehydroxylation of boehmite is 15%. In Ba doped boehmite a weight loss of less than 15% was expected whatever barium compound was present, for example carbonate or hydroxide, due to the high atomic weight of barium compared with aluminium. There was no indication of Ba phases such as BaCO₃ or Ba(OH)₂·xH₂O which have a number of well-defined peaks by which they could easily be identified if present.

BET surface area measurements were made on samples calcined for 1 hour at either 1200°C or 1400°C. For calcination at 1200°C, a value of 45.2 m²/g was measured for specimens autoclaved for 4 hours. For calcination at 1400°C, values of 5.9 m²/g and 31.2 m²/g were obtained for specimens autoclaved for 4 hours and 22 hours respectively. The longer autoclave treatment resulted in larger boehmite crystal size in the sample before calcination. After calcination at 1400°C, the phase composition of the specimens was also different. From XRD analysis, the phases present in order of abundance in the specimen autoclaved for 4h were: θ-Al₂O₃, δ-Al₂O₃, BaAl₂O₄ and β_{II}. The specimen autoclaved for 22 hours differed in that δ-Al₂O₃ was absent.

TEM examination showed that considerable morphological differences existed between oven-dried, microwave-dried and hydrothermally treated samples, both before and after calcination.

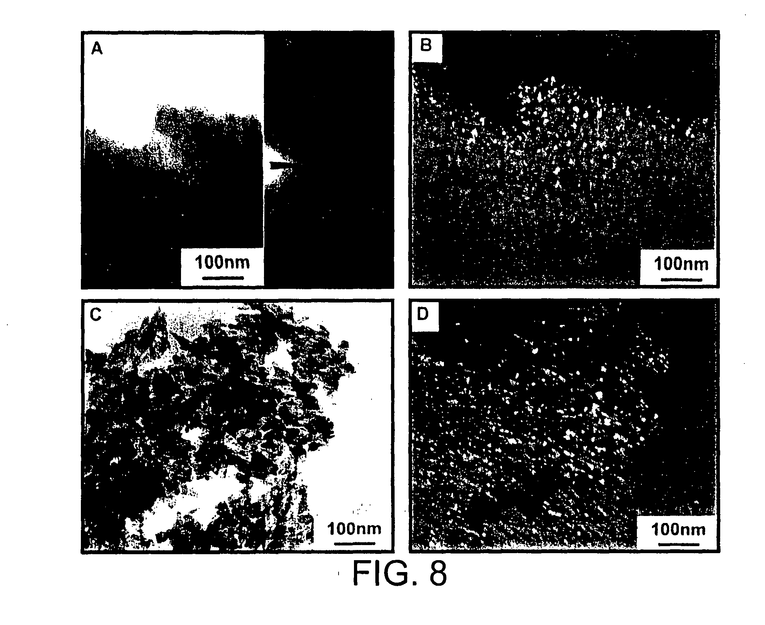

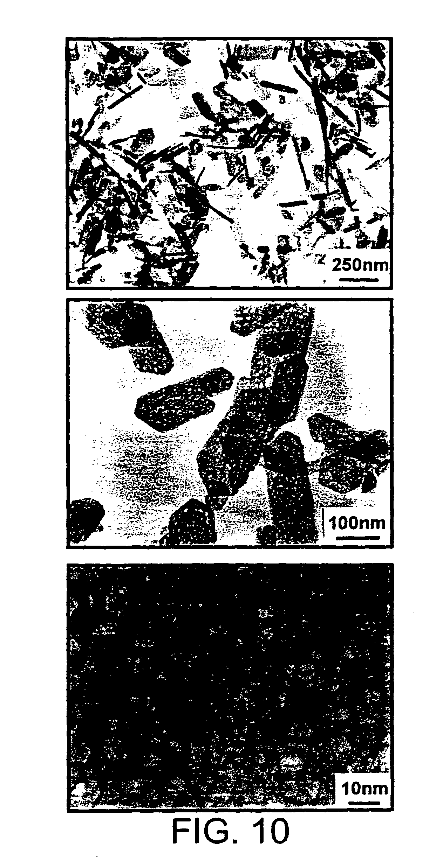

Before calcination, the oven-dried material consisted of densely agglomerated fine crystals, Figures 8A and 8B, which were identified by electron diffraction as bayerite. The microwaved material was much less tightly agglomerated as shown in Figure 9A and consisted of boehmite crystallites of about 5 nm as seen by HRTEM (not shown here) which approximately correspond to the size of the colloidal particles in the gel. The hydrothermally treated sample consisted of plate-like boehmite crystals about 250 x 100 x 10 nm as shown in Figure 10A. There was no evidence of a separate Ba containing phase in any of the uncalcined samples.

TEM micrographs of oven-dried material calcined for 1 hour at 1000°C indicated the presence of a γ-Al₂O₃ matrix and finely distributed BaO (small dark particles) (see Figures 8C and 8D). The crystallite size of the γ-Al₂O₃ and barium containing phase was about the same after calcination as that of bayerite before calcination (see Figures 8B and 8D). After calcination at 1000°C the autoclaved material consisted of γ-Al₂O₃ which retained the shape of the boehmite crystals (pseudomorphs) as shown in Figure 10B. The pseudomorphs were porous and the pore facets can be seen in Figure 10C.

The TEM images of microwaved material calcined for 1 hour at 1200°C, Figures 1 and 9B, show the start of the transition from θ-Al₂O₃ to α-Al₂O₃ in pure alumina and in alumina-baria samples, respectively. After calcination at 1400°C for 1 hour in air or argon, the microwaved material consisted of BaAl_{13.2}O_{20.8} (β₁) particles of from 10 to 15 nm diameter and much larger α-Al₂O₃ crystals as shown in Figures 9C to 9F. The β₁ particles were predominantly within the α-Al₂O₃ crystals after calcination in air, but were distributed both within and on the surface of the α-Al₂O₃ crystals after calcination in argon.

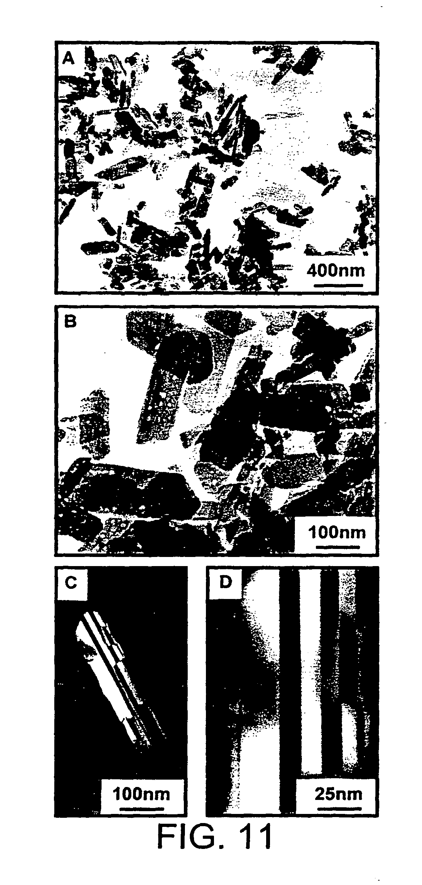

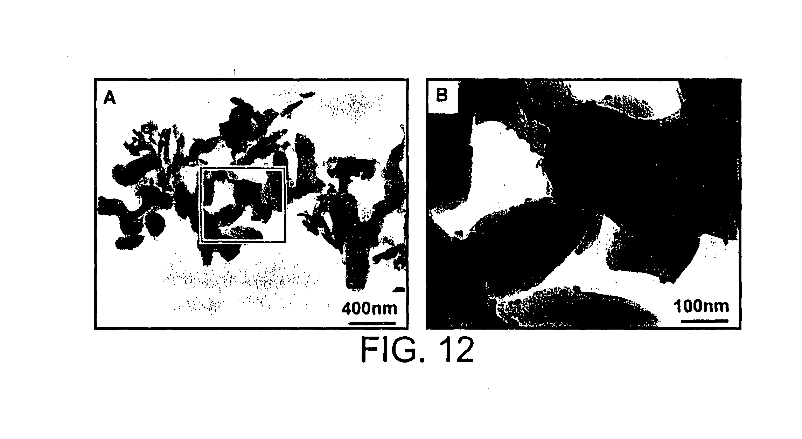

The autoclave treated material, calcined at 1400°C in air, consisted mainly of finely twinned θ-Al₂O₃ with twin planes spaced about 5 nm apart as shown in Figures 11 A-D. The boehmite pseudomorph crystal shape was still retained although the internal porosity was much less than at 1000°C, and was more spherical in shape. The θ-Al₂O₃ twin planes were parallel to the long axis of the pseudomorphs, i.e. the boehmite <001> direction. There was no evidence of sintering between the crystals and their size was similar to that at 1200°C. Small amounts α-Al₂O₃ were observed. Detailed HRTEM examination of transition alumina structures in the autoclave treated samples indicated that the fine twinning in θ-Al₂O₃ seen in the material calcined at 1400°C probably resulted from the ordering of cation vacancies in δ-Al₂O₃ at lower temperatures. In contrast, autoclave treated material, calcined at 1400°C in argon, consisted of large crystals of α-Al₂O₃ decorated on the surface with 10 nm particles of BaAl₁₂O₁₉ which has a magnetoplumbite structure rather than a β type structure (see Figures 12A and 12B).

The present invention provides a process whereby transition alumina can be further stabilized against thermal degradation to alpha-alumina. This results in a catalyst which is effective at higher operating temperatures and for longer times compared with the prior art catalysts. An additional advantage of the present invention is that it is very effective at forming thin (approximately 1 to 5 µm) washcoats of gamma-alumina on cordierite or other ceramic substrates. This is important because the use in the future of ceramic honeycomb substrates with a very high channel density will require the use of thinner washcoats. The process according to the present invention can produce thinner films where (coated) boehmite is used in the slurry, rather than gamma-alumina.

## Claims

1. A process for the production of a precursor material for use in the preparation of stabilized alumina catalyst support material, which process comprises the steps of:
(a) providing a substantially homogeneous mixture comprising aluminium and barium containing compounds, wherein said mixture is in the form of a substantially homogeneous precipitate; and
(b) heating the mixture under conditions to form particles of boehmite at least partially coated with a layer comprising a compound of barium.

2. A process as claimed in claim 1, wherein the layer formed on the particles of boehmite comprises barium carbonate.

3. A process as claimed in claim 1 or claim 2, wherein the aluminium containing compound comprises aluminium chloride, aluminium nitrate, aluminium sulphate, alumina and/or boehmite.

4. A process as claimed in any one of the preceding claims, wherein the barium containing compound comprises barium chloride, barium sulphate and/or barium nitrate.

5. A process as claimed in any one of the preceding claims, wherein the substantially homogeneous precipitate is formed by a process involving homogeneous precipitation of aluminium and barium containing compounds from salt solution.

6. A process as claimed in claim 5, wherein the homogeneous precipitation involves generating a base within the salt solution through thermal decomposition of a water-soluble reagent.

7. A process as claimed in claim 6, wherein the water-soluble reagent comprises urea and/or hexamethylene tetramine.

8. A process as claimed in any one of claims 5 to 7, wherein the salt solution further includes a dispersant, such as polyvinylpyrrolidone.

9. A process as claimed in any one of claims 1 to 3, wherein the mixture in step (a) is formed by adding a solution comprising oxalic acid and a water soluble barium compound, preferably barium nitrate, to an aqueous slurry comprising boehmite.

10. A process as claimed in any one of the preceding claims, wherein heating of the mixture in step (b) is achieved by a hydrothermal process.

11. A process as claimed in claim 10, wherein the hydrothermal treatment is carried out at a temperature in the range of from 90 to 300°C, more preferably from 100 to 220°C.

12. A process as claimed in claim 10 or claim 11, wherein the hydrothermal treatment is carried out at a pressure in the range of from 1 to 150 bar, preferably from 5 to 50 bar.

13. A process as claimed in any one of claims 10 to 12, wherein the hydrothermal treatment is carried out for a time in the range of from 30 minutes to 25 hours, preferably from 1 to 10 hours.

14. A process as claimed in any one of claims 1 to 9, wherein the mixture in step (b) is heated at a temperature in the range of from ambient temperature to boiling temperature, preferably by a reflux process.

15. A process for the preparation of a stabilized alumina catalyst support material, which process comprises the steps of:
(i) providing a precursor material comprising particles of boehmite at least partially coated with a layer comprising a compound of barium, wherein the precursor material is produced according to a process as claimed in any one of claims 1 to 14; and
(ii) heating the coated particles of boehmite to a temperature at which least some of the boehmite transforms to gamma-alumina.

16. A process as claimed in claim 15, comprising the step of further heating whereby at least some of the gamma-alumina transforms to theta and/or delta-alumina.

17. A process for the preparation of an automotive catalytic converter, which process comprises the steps of:
(i) providing a precursor material comprising particles of boehmite at least partially coated with a layer comprising a compound of barium, wherein the precursor material is produced according to a process as claimed in any one of claims 1 to 14;
(ii) dispersing a mixture comprising said precursor material on a metal or ceramic monolithic substrate; and
(iii)heating said mixture comprising said precursor material to a temperature at which at least some of the boehmite transforms to gamma-alumina.

18. A process as claimed in claim 17, comprising the step of further heating whereby at least some of the gamma-alumina transforms to theta and/or delta-alumina.

19. A process as claimed in claim 15 or claim 17, wherein heating is carried out at a temperature in the range of from 500 to 1000°C.

20. A process as claimed in claim 16 or claim 18, wherein the further heating is carried out at a temperature in the range of from 1000 to 1400°C.

21. A precursor material for the use in the preparation of catalyst support material, which precursor material is obtained by a process comprising the steps of:
(a) providing a substantially homogeneous mixture comprising aluminium and barium containing compounds, wherein said mixture is in the form of a substantially homogeneous precipitate; and
(b) heating the mixture under conditions to form particles of boehmite and/or transition alumina at least partially coated with a layer comprising barium carbonate, barium oxide and/or barium aluminate.

22. A precursor material as claimed in claim 21 provided in the form of a slurry or washcoat.

23. A stabilized alumina catalyst support material of a type capable of withstanding substantial degradation to alpha-alumina after exposure to a temperature of approximately 1400°C for 1 hour, obtained by a process comprising the steps of:
(a) providing a substantially homogeneous mixture comprising aluminium and barium containing compounds, wherein said mixture is in the form of a substantially homogeneous precipitate; and
(b) heating the mixture under conditions to form particles of boehmite at least partially coated with a layer comprising a compound of barium.
which material comprises particles of gamma, theta and/or delta-alumina substantially completely coated with a layer comprising barium carbonate, barium oxide and/or barium aluminate.

24. A stabilized alumina catalyst carrier or support material as claimed in claim 23 having a specific area of at least 20 m²/g after exposure to a temperature of 1400°C for 1 hour.

25. A stabilized alumina catalyst carrier or support material as claimed in claim 23 or claim 24 having a specific surface area of at least 31 m²/g after exposure to a temperature of 1400°C 1 hour.

## Patentansprüche

1. Verfahren zur Erzeugung eines Vorläufermaterials zur Verwendung bei der Herstellung eines Katalysatorträgermaterials aus stabilisiertem Aluminiumoxid, wobei das Verfahren die folgenden Schritte umfasst:
(a) Bereitstellen eines im Wesentlichen homogenen Gemischs, das aluminium- und bariumhaltige Verbindungen umfasst, wobei das Gemisch in Form eines im Wesentlichen homogenen Niederschlags vorliegt; und
(b) Erhitzen des Gemischs unter Bedingungen zur Bildung von Böhmitpartikeln, die zumindest teilweise mit einer Schicht beschichtet sind, die eine Bariumverbindung umfasst.

2. Verfahren nach Anspruch 1, wobei die auf den Böhmitpartikeln gebildete Schicht Bariumcarbonat umfasst.

3. Verfahren nach Anspruch 1 oder 2, wobei die aluminiumhaltige Verbindung Aluminiumchlorid, Aluminiumnitrat, Aluminiumsulfat, Aluminiumoxid und/oder Böhmit umfasst.

4. Verfahren nach irgendeinem der vorangehenden Ansprüche, wobei die bariumhaltige Verbindung Bariumchlorid, Bariumsulfat und/oder Bariumnitrat umfasst.

5. Verfahren nach irgendeinem der vorangehenden Ansprüche, wobei der im Wesentlichen homogene Niederschlag durch ein Verfahren gebildet wird, das ein homogenes Ausfällen von aluminium- und bariumhaltigen Verbindungen aus einer Salzlösung einbezieht.

6. Verfahren nach Anspruch 5, wobei das homogene Ausfällen das Bilden einer Base in der Salzlösung durch thermische Zersetzung eines wasserlöslichen Reagens einbezieht.

7. Verfahren nach Anspruch 6, wobei das wasserlösliche Reagens Harnstoff und/oder Hexamethylentetramin umfasst.

8. Verfahren nach irgendeinem der Ansprüche 5 bis 7, wobei die Salzlösung ferner ein Dispergiermittel wie Polyvinylpyrrolidon umfasst.

9. Verfahren nach irgendeinem der Ansprüche 1 bis 3, wobei das Gemisch in Schritt (a) gebildet wird, indem eine Lösung, die Oxalsäure und eine wasserlösliche Bariumverbindung, vorzugsweise Bariumnitrat, umfasst, einem wässrigen Schlamm zugesetzt wird, der Böhmit umfasst.

10. Verfahren nach irgendeinem der vorangehenden Ansprüche, wobei das Erhitzen des Gemischs in Schritt (b) durch ein Hydrothermalverfahren ausgeführt wird.

11. Verfahren nach Anspruch 10, wobei die Hydrothermalbehandlung bei einer Temperatur im Bereich von 90 bis 300°C, bevorzugter von 100 bis 220°C, durchgeführt wird.

12. Verfahren nach Anspruch 10 oder 11, wobei die Hydrothermalbehandlung bei einem Druck im Bereich von 1 bis 150 bar, vorzugsweise von 5 bis 50 bar, durchgeführt wird.

13. Verfahren nach irgendeinem der Ansprüche 10 bis 12, wobei die Hydrothermalbehandlung für einen Zeitraum im Bereich von 30 Minuten bis 25 Stunden, vorzugsweise von 1 bis 10 Stunden, durchgeführt wird.

14. Verfahren nach irgendeinem der Ansprüche 1 bis 9, wobei das Gemisch in Schritt (b) bei einer Temperatur im Bereich von Umgebungs- bis Siedetemperatur, vorzugsweise durch ein Rückflussverfahren, erhitzt wird.

15. Verfahren zur Herstellung eines Katalysatorträgermaterials aus stabilisiertem Aluminiumoxid, wobei das Verfahren die folgenden Schritte umfasst:
(i) Bereitstellen eines Vorläufermaterials, das Böhmitpartikel umfasst, die zumindest teilweise mit einer Schicht beschichtet sind, die eine Bariumverbindung umfasst, wobei das Vorläufermaterial nach einem Verfahren nach irgendeinem der Ansprüche 1 bis 14 hergestellt wird; und
(ii) Erhitzen der beschichteten Böhmitpartikel auf eine Temperatur, bei der zumindest ein Teil des Böhmits in Gamma-Aluminiumoxid umgewandelt wird.

16. Verfahren nach Anspruch 15, umfassend den Schritt des weiteren Erhitzens, wodurch zumindest ein Teil des Gamma-Aluminiumoxids in Theta-und/oder Delta-Aluminiumoxid umgewandelt wird.

17. Verfahren zur Herstellung eines Kraftfahrzeugkatalysators, wobei das Verfahren die folgenden Schritte umfasst:
(i) Bereitstellen eines Vorläufermaterials, das Böhmitpartikel umfasst, die zumindest teilweise mit einer Schicht beschichtet sind, die eine Bariumverbindung umfasst, wobei das Vorläufermaterial nach einem Verfahren nach irgendeinem der Ansprüche 1 bis 14 hergestellt wird;
(ii) Dispergieren eines Gemischs, das das Vorläufermaterial umfasst, auf einem metallischen oder keramischen Monolithsubstrat; und
(iii) Erhitzen des Gemischs, das das Vorläufermaterial umfasst, auf eine Temperatur, bei der zumindest ein Teil des Böhmits in Gamma-Aluminiumoxid umgewandelt wird.

18. Verfahren nach Anspruch 17, umfassend den Schritt des weiteren Erhitzens, wodurch zumindest ein Teil des Gamma-Aluminiumoxids in Theta-und/oder Delta-Aluminiumoxid umgewandelt wird.

19. Verfahren nach Anspruch 15 oder 17, wobei das Erhitzen bei einer Temperatur im Bereich von 500 bis 1000°C durchgeführt wird.

20. Verfahren nach Anspruch 16 oder 18, wobei das weitere Erhitzen bei einer Temperatur im Bereich von 1000 bis 1400°C durchgeführt wird.

21. Vorläufermaterial zur Verwendung bei der Herstellung eines Katalysatorträgermaterials, wobei das Vorläufermaterial durch ein Verfahren gewonnen wird, das die Schritte umfasst:
(a) Bereitstellen eines im Wesentlichen homogenen Gemischs, das aluminium- und bariumhaltige Verbindungen umfasst, wobei das Gemisch in Form eines im Wesentlichen homogenen Niederschlags vorliegt; und
(b) Erhitzen des Gemischs unter Bedingungen zur Bildung von Böhmit- und/oder Übergangsaluminiumoxid-Partikeln, die zumindest teilweise mit einer Schicht beschichtet sind, die Bariumcarbonat, Bariumoxid und/oder Bariumaluminat umfasst.

22. Vorläufermaterial nach Anspruch 21, bereitgestellt in Form eines Schlamms oder Washcoats.

23. Katalysatorträgermaterial aus stabilisiertem Aluminiumoxid, von einem Typ, der einem wesentlichen Abbau zu Alpha-Aluminiumoxid nach einstündiger Einwirkung einer Temperatur von ungefähr 1400°C widerstehen kann, gewonnen durch ein Verfahren, das die folgenden Schritte umfasst:
(a) Bereitstellen eines im Wesentlichen homogenen Gemischs, das aluminium- und bariumhaltige Verbindungen umfasst, wobei das Gemisch in Form eines im Wesentlichen homogenen Niederschlags vorliegt; und
(b) Erhitzen des Gemischs unter Bedingungen zur Bildung von Böhmitpartikeln, die zumindest teilweise mit einer Schicht beschichtet sind, die eine Bariumverbindung umfasst,
wobei das Material Gamma-, Theta- und/oder Delta-Aluminiumoxid-Partikel umfasst, die im Wesentlichen ganz mit einer Schicht beschichtet sind, die Bariumcarbonat, Bariumoxid und/oder Bariumaluminat umfasst.

24. Katalysatorträger oder Katalysatorträgermaterial aus stabilisiertem Aluminiumoxid nach Anspruch 23, mit einer spezifischen Oberfläche von mindestens 20 m²/g nach einstündiger Einwirkung einer Temperatur von 1400°C.

25. Katalysatorträger oder Katalysatorträgermaterial aus stabilisiertem Aluminiumoxid nach Anspruch 23 oder 24, mit einer spezifischen Oberfläche von mindestens 31 m²/g nach einstündiger Einwirkung einer Temperatur von 1400°C.

## Revendications

1. Procédé pour la production d'une matière précurseur à utiliser dans la préparation d'une matière de support de catalyseur d'alumine stabilisée, ledit procédé comprenant les étapes de :
(a) procurer un mélange essentiellement homogène comprenant des composés contenant de l'aluminium et du baryum, ledit mélange se présentant sous la forme d'un précipité essentiellement homogène ; et
(b) chauffer le mélange dans des conditions qui permettent de former des particules de boehmite enduites au moins en partie d'une couche comprenant un composé de baryum.

2. Procédé selon la revendication 1, dans lequel la couche formée sur les particules de boehmite comprend du carbonate de baryum.

3. Procédé selon la revendication 1 ou 2, dans lequel le composé contenant de l'aluminium comprend du chlorure d'aluminium, du nitrate d'aluminium, du sulfate d'aluminium, de l'alumine et/ou de la boehmite.

4. Procédé selon l'une quelconque des revendications précédentes, dans lequel le composé contenant du baryum comprend du chlorure de baryum, du sulfate de baryum et/ou du nitrate de baryum.

5. Procédé selon l'une quelconque des revendications précédentes, dans lequel le précipité essentiellement homogène est formé via un procédé impliquant la précipitation homogène de composés contenant de l'aluminium et du baryum à partir d'une solution salée.

6. Procédé selon la revendication 5, dans lequel la précipitation homogène implique la génération d'une base au sein de la solution salée par décomposition thermique d'un réactif soluble dans l'eau.

7. Procédé selon la revendication 6, dans lequel le réactif soluble dans l'eau comprend de l'urée et/ou de l'hexaméthylènetétramine.

8. Procédé selon l'une quelconque des revendications 5 à 7, dans lequel la solution salée englobe en outre un agent dispersant tel que la polyvinylpyrrolidone.

9. Procédé selon l'une quelconque des revendications 1 à 3, dans lequel le mélange à l'étape (a) est formé par addition d'une solution comprenant de l'acide oxalique et un composé de baryum soluble dans l'eau, de préférence du nitrate de baryum, à une suspension aqueuse comprenant de la boehmite.

10. Procédé selon l'une quelconque des revendications précédentes, dans lequel le chauffage du mélange à l'étape (b) est mis en oeuvre via un procédé hydrothermique.

11. Procédé selon la revendication 10, dans lequel le traitement hydrothermique est mis en oeuvre à une température dans la plage de 90 à 300 °C, de manière plus préférée de 100 à 220 °C.

12. Procédé selon la revendication 10 ou 11, dans lequel le traitement hydrothermique est mis en oeuvre sous une pression dans la plage de 1 à 150 bars, de préférence de 5 à 50 bars.

13. Procédé selon l'une quelconque des revendications 10 à 12, dans lequel le traitement hydrothermique est mis en oeuvre pendant un laps de temps dans la plage de 30 minutes à 25 heures, de préférence de 1 à 10 heures.

14. Procédé selon l'une quelconque des revendications 1 à 9, dans lequel le mélange à l'étape (b) est chauffé à une température dans la plage allant de la température ambiante à la température d'ébullition, de préférence via un procédé de chauffage à reflux.

15. Procédé pour la préparation d'une matière de support de catalyseur d'alumine stabilisée, ledit procédé comprenant les étapes de :
(i) procurer une matière précurseur comprenant des particules de boehmite enduites au moins en partie d'une couche comprenant un composé de baryum, la matière précurseur étant obtenue conformément à un procédé selon l'une quelconque des revendications 1 à 14 ; et
(ii) chauffer les particules de boehmite enduites à une température à laquelle au moins une certaine quantité de la boehmite se transforme en alumine gamma.

16. Procédé selon la revendication 15, comprenant l'étape de chauffer supplémentairement, si bien qu'au moins une certaine quantité de l'alumine gamma se transforme en alumine thêta et/ou delta.

17. Procédé pour la préparation d'un pot catalytique pour automobile, ledit procédé comprenant les étapes de :
(i) procurer une matière précurseur comprenant des particules de boehmite enduites au moins en partie d'une couche comprenant un composé de baryum, la matière précurseur étant obtenue conformément à un procédé selon l'une quelconque des revendications 1 à 14 ;
(ii) disperser un mélange comprenant ladite matière précurseur sur un substrat monolithique métallique ou céramique ; et
(iii) chauffer ledit mélange comprenant ladite matière précurseur à une température à laquelle au moins une certaine quantité de la boehmite se transforme en alumine gamma.

18. Procédé selon la revendication 17, comprenant l'étape de chauffer supplémentairement, si bien qu'au moins une certaine quantité de l'alumine gamma se transforme en alumine thêta et/ou delta.

19. Procédé selon la revendication 15 ou 17, dans lequel le chauffage est mis en oeuvre à une température dans la plage de 500 à 1000 °C.

20. Procédé selon la revendication 16 ou 18, dans lequel le chauffage supplémentaire est mis en oeuvre à une température dans la plage de 1000 à 1400 °C.

21. Matière précurseur à utiliser dans la préparation d'une matière de support de catalyseur, ladite matière précurseur étant obtenue via un procédé comprenant les étapes de :
(a) procurer un mélange essentiellement homogène comprenant des composés contenant de l'aluminium et du baryum, ledit mélange se présentant sous la forme d'un précipité essentiellement homogène ; et
(b) chauffer le mélange dans des conditions qui permettent de former des particules de boehmite et/ou d'alumine de transition enduites au moins en partie d'une couche comprenant du carbonate de baryum, de l'oxyde de baryum et/ou de l'aluminate de baryum.

22. Matière précurseur selon la revendication 21, procurée sous la forme d'une suspension ou d'un washcoat.

23. Matière de support de catalyseur d'alumine stabilisée, d'un type capable de résister à une dégradation substantielle en alumine alpha après exposition à une température d'approximativement 1400 °C pendant 1 heure, que l'on obtient via un procédé comprenant les étapes de :
(a) procurer un mélange essentiellement homogène comprenant des composés contenant de l'aluminium et du baryum, ledit mélange se présentant sous la forme d'un précipité essentiellement homogène ; et
(b) chauffer le mélange dans des conditions qui permettent de former des particules de boehmite enduites au moins en partie d'une couche comprenant un composé de baryum,
ladite matière comprenant des particules d'alumine gamma, thêta et/ou delta enduites, de manière essentiellement complète, d'une couche comprenant du carbonate de baryum, de l'oxyde de baryum et/ou de l'aluminate de baryum.

24. Matière de support ou porteuse de catalyseur d'alumine stabilisée selon la revendication 23, possédant une aire de surface spécifique d'au moins 20 m²/g après exposition à une température de 1400 °C pendant 1 heure.

25. Matière de support ou porteuse de catalyseur d'alumine stabilisée selon la revendication 23 ou 24, possédant une aire de surface spécifique d'au moins 31 m²/g après exposition à une température de 1400 °C pendant 1 heure
